# EUROPÄISCHE PATENTSCHRIFT

(11) **EP 2 410 149 B1**
(45) Veröffentlichungstag und Bekanntmachung des Hinweises auf die Patenterteilung: **02.11.2016**
(21) Anmeldenummer: 11173051.1
(22) Anmeldetag: 07.07.2011
(51) Int. Cl.: F01N 13/14, F01N 3/28

(54) **Abgasanlage**
Exhaust system
Installation de gaz d'échappement

(30) Priorität: 22.07.2010 DE 102010031853
(43) Veröffentlichungstag der Anmeldung: 25.01.2012
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: BRP Renaud & Partner mbB Rechtsanwälte Patentanwälte Steuerberater

(56) Entgegenhaltungen:
- DE-A1-102006 011 889
- DE-A1-102008 051 278
- DE-A1-102008 061 026

## Beschreibung

Die vorliegende Erfindung betrifft eine Abgasanlage für eine Brennkraftmaschine, insbesondere eines Kraftfahrzeuges, die wenigstens eine Komponente aufweist.

Eine Abgasanlagenkomponente ist beispielsweise ein Katalysator, ein Partikelfilter, ein Wärmeübertrager, ein Rohr oder Rohrabschnitt und ein Schalldämpfer.

Aus der EP 0 560 616 A1 ist eine Abgasanlage bekannt, die einen Hohlmantel aufweist. Ein von Wänden des Hohlmantels begrenzter Zwischenraum kann mit einem Unterdruck beaufschlagt werden. Zu diesem Zweck ist der Zwischenraum des Hohlmantels über eine Unterdruckverbindungsleitung mit der Luftansaugung der Brennkraftmaschine verbunden. Ist demzufolge die Brennkraftmaschine im Betrieb, wird durch deren Ansaugung von Luft auch das in dem Zwischenraum des Mantels befindliche Fluid abgesaugt, wodurch in diesem Zwischenraum ein Unterdruck entsteht. Gesteuert werden kann diese Unterdruckerzeugung durch ein Unterdrucksteuerventil, das in der Unterdruckverbindungsleitung angeordnet ist. Mit diesem Unterdrucksteuerventil kann der Zwischenraum des Hohlmantels auch belüftet werden.

Aus der WO 00/43103 und der US 6,162,403 sind jeweils Katalysatoren mit einem evakuierten doppelwandigen Mantel bekannt. Des Weiteren ist in einem evakuierten Bereich des Mantels ebenfalls ein Material angeordnet, das durch einen Phasenübergang bei einer vorbestimmten Temperatur Wärme absorbieren oder abgeben kann. Somit wird bei weiterer Erhitzung und auch kurzfristiger Abkühlung durch den Phasenübergang des Materials der Katalysator auf konstante Temperatur gehalten, solange noch ein Phasenübergang des Materials möglich ist.

Der Katalysator der US 6,203,764 B1 weist ebenfalls einen doppelwandigen evakuierten Mantel auf. In dem Mantel ist wasserstoffabsorbierendes Material angeordnet. Bei niedriger Temperatur ist der größte Teil des Wasserstoffs von dem wasserstoffabsorbierenden Material gebunden und es herrscht in dem doppelwandigen Mantel ein Unterdruck. Heizt sich der Katalysator während des Betriebes auf, so beginnt ab einer vorbestimmten Temperatur das wasserstoffabsorbierende Material den Wasserstoff freizugeben, wodurch der Unterdruck in dem doppelwandigen Mantel sinkt. Somit hat der doppelwandige Mantel bei tieferer Temperatur eine höhere Isolationswirkung als bei höherer Temperatur aufgrund des sinkenden Unterdrucks und der Wärmekonvektion durch die frei gewordenen Wasserstoffmoleküle.

Ferner offenbart DE 10 2008 051 278 A eine Abgasanlage, wobei zumindest ein Abgaskrümmer mit einer zusätzlichen Aussenschale versehen ist, die einen isolierenden Luftraum zwischen Abgaskrümmer und Aussenschale bildet und wobei der Luftraum mittels einer Vakuumpumpe evakuierbar ist.

Die Abgasnachbehandlung, insbesondere die katalytische Abgasnachbehandlung, entfaltet nur innerhalb eines vorbestimmten Temperaturintervalls eine optimale Wirksamkeit. Außerhalb dieses vorbestimmten Temperaturbereiches sinkt die Wirksamkeit der Abgasnachbehandlung und/oder erlischt vollständig. Demzufolge ist es insbesondere bei den katalytischen Komponenten der Abgasanlage oder auch bei der gesamten Abgasanlage notwendig, die an der Abgasanlage auftretenden Wärmeverluste durch Isolation zu verringern. Dadurch kann, insbesondere beim Kaltstart, die Abgasanlage und deren Komponenten schneller aufgeheizt werden und unter anderem die katalytische Abgasnachbehandlung optimal funktionieren.

Dies ist insbesondere in den Lastbereichen wünschenswert, bei denen das Abgas relativ kalt ist, wie zum Beispiel während eines Kaltstarts. In diesen Lastbereichen ist eine bestmögliche Isolation erwünscht, um eine weitere Abkühlung des Abgases zu verringern bzw. zu vermeiden. Dadurch lassen sich signifikant die Abgasemissionswerte verbessern und die geforderten Emissionsrichtlinien einhalten.

Allerdings können auch Lastbereiche auftreten, bei denen das Abgas zu heiß ist und somit das vorbestimmte Temperaturintervall der Abgasnachbehandlung überschritten wird. In diesem Fall kann es ebenfalls zu einer verminderten Funktionalität der Komponenten der Abgasanlage hinsichtlich der Abgasnachbehandlung kommen, und demzufolge ist diesen Lastpunkten eine Abkühlung des Abgases nicht nur wünschenswert, sondern gegebenenfalls sogar erforderlich. Demzufolge sind in diesen Lastbereichen eine geringe Isolation der Abgasanlage und deren Komponenten vorteilhaft.

Die vorliegende Erfindung beschäftigt sich somit mit dem Problem, für eine Isolierung einer Abgasanlage, deren Komponenten und ein zugehöriges Betriebsverfahren eine verbesserte oder zumindest eine alternative Ausführungsform anzugeben, die sich insbesondere durch eine flexiblere an den jeweiligen Bedarf angepassten Isolation auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Isolierung einer Abgasanlage für eine Brennkraftmaschine, insbesondere eines Kraftfahrzeuges, oder deren Komponenten durch einen die Komponente bzw. die Abgasanlage zumindest teilweise umgebenden Hohlmantel auszubilden, wobei von den Wänden des Hohlmantels ein druckdicht verschließbarer Zwischenraum ausgebildet wird, und den Zwischenraum fluidisch durch eine Unterdruckverbindungsleitung und über eine Unterdruckanschlussstelle der Komponente bzw. Abgasanlage mit einer Unterdruckerzeugungseinrichtung zu verbinden, mittels der in dem Zwischenraum ein Unterdruck erzeugt werden kann, und den Zwischenraum zumindest teilweise durch eine Stützstruktur und/oder ein Fasermaterial und/oder einen Schaum abzustützen.

Durch einen derart evakuierbaren Hohlmantel, dessen Zwischenraum an eine Unterdruckerzeugungseinrichtung fluidisch angebunden ist, kann die Isolationswirkung des Hohlmantels durch Einstellung des Unterdrucks an die jeweilige Bedarfssituation angepasst werden. Somit ist eine flexible, bedarfsgerechte Isolierung der Abgasanlage und/oder deren Komponenten möglich, wodurch die Abgasemissionswerte deutlich verbessert werden können.

Mit einem solchen Hohlmantel kann eine Abgasanlage zumindest teilweise oder auch nur eine Komponente einer Abgasanlage zumindest teilweise umgeben werden. Als eine solche Komponente kann bevorzugt die Rohrleitung der Abgasanlage mit einem derartigen Hohlmantel ausgestattet werden. Besonders bevorzugt sind auch weitere Komponenten der Abgasanlage, wie zum Beispiel ein Katalysatortrichter, ein Katalysatorgehäuse, weitere Rohre und Rohrverbindungsstücke, ein Partikelfilter, ein SCR(selektive katalytische Reduktion)-Katalysator, ein NSK (NOX-Speicher-Katalysator), ein Add-blue-Dosiermodul, ein Dosierstutzen, ein Krümmer, akustische Komponenten, wie zum Beispiel ein Schalldämpfer, ein aktiver Schalldämpfer, Aktuatoren oder dergleichen, ein Fuel Processor-Gehäuse, eine Einmischstrecke für den Fuel Processor, eine HWL(Harnstoff-Wasserstoff-Lösung)-Dosiereinrichtung, ein Turbolader, ein Vorrohr, ein Kondensationskühler, ein Sammelbehälter, eine Rücklaufleitung, eine Vorlaufleitung oder dergleichen mit einem derartigen Hohlmantel isoliert.

Die Wände eines derartigen Hohlmantels umschließen einen Zwischenraum, der unter anderem durch die Wände des Hohlmantels druckdicht verschlossen ist.

Zwischen den Wänden kann zumindest teilweise Füllmaterial angeordnet sein. Dieses Füllmaterial kann bevorzugt als thermischer Isolator ausgestaltet sein und eine entsprechende isolierende Wirkung aufweisen, wodurch der Strahlungs-Wärmeaustausch zwischen den Wänden des Hohlmantels reduziert ist. Des Weiteren kann das Isoliermaterial auch eine abstützende Funktion ausüben, so dass vorteilhaft aufgrund der wechselseitigen Abstützung der Wände eine höhere Stabilität des Hohlmantels gegeben ist. Vorteilhaft kann dadurch Material gespart werden, da aufgrund der erhöhten Stabilität die Wände zumindest in Teilbereichen dünner ausgebildet werden können.

Beispielsweise kann das Füllmaterial in dem Zwischenraum des Hohlmantels zumindest in Teilbereichen gebildet sein durch eine Fasermatte, bevorzugt eine keramische Fasermatte, eine geschlossenporige Schaumstruktur, bevorzugt eine offenporige Schaumstruktur, eine Schaumstruktur aus keramischen oder metallischen Material, Mineralwolle, Glaswolle oder dergleichen. Ebenfalls kann es sich beim Füllmaterial um Keramikpapier, um vergleichsweise dünne (Dicke kleiner als 0,2mm) Bleche oder Folien aus einem thermisch schlecht leitenden Metall oder Kunststoff handeln, wobei die Bleche oder Folien profiliert, insbesondere gewellt, sein können und in mehreren Lagen aufeinandergeschichtet sein können, zwischen denen Hohlräume ausgebildet sind.

Bevorzugt ist der Zwischenraum zumindest teilweise mit einem Schaum ausgeschäumt, wobei der Schaum zumindest teilweise bevorzugt aus einer Schaumkeramik, bevorzugt aus Blähton, bevorzugt aus Schaumglas, bevorzugt aus einem Metallschaum, besonders bevorzugt aus einem Kunststoffschaum oder aus anderen schäumbaren Materialien besteht. Des Weiteren kann alternativ oder zusätzlich dazu eine Stützstruktur vorgesehen sein, wie zum Beispiel ein Wellblech, Noppen, Sicken und/oder dergleichen.

Unter einem Schaum versteht man ein zellular aufgebautes Material, bei dem die Zellwände des zellularen Materials Hohlräume zumindest teilweise umgeben. Ist der Schaum geschlossenporös aufgebaut, so sind die einzelnen Hohlräume von geschlossenen Zellwänden umgeben. Ein derartiger Schaum ist im Wesentlichen von Fluiden nicht durchströmbar. Bei einem offenporösen Schaum sind die einzelnen Hohlräume fluidisch miteinander verbunden, so dass in diesem Fall ein Fluid einen derartigen offenporösen Schaum durchströmen kann.

Unter einem Fluid versteht man Gase und Flüssigkeiten, sowie Dämpfe, Aerosole und Mischungen derselben.

Der Hohlmantel kann in unterschiedlicher Art und Weise ausgebildet sein. Bevorzugt ist dabei ein tragendes Rohr oder tragendes Gehäuse außenseitig und/oder innenseitig von einer, insbesondere aus Blech ausgeformten, Wandung zumindest teilweise umgeben. Zwischen dem Gehäuse bzw. Rohr und der Wandung wird dann der evakuierbare Zwischenraum ausgebildet. Die innenseitig und/oder außenseitig positionierte Wandung ist mit dem Rohr bzw. Gehäuse durch Schweißen, Bördeln, Falzen oder dergleichen so verbunden, dass der Zwischenraum druckdicht ausgebildet ist. Der Hohlmantel wird somit durch das Gehäuse oder das Rohr zusammen mit der Wandung ausgebildet.

Ebenfalls bevorzugt kann das Rohr bzw. Gehäuse innen- und/oder außenseitig von einem, insbesondere nicht tragenden, doppelwandigen Mantel zumindest teilweise umgeben sein. Dieser doppelwandige Mantel kann ebenfalls mit dem Rohr bzw. Gehäuse durch Schweißen, Bördeln, Falzen oder dergleichen verbunden sein. Dabei ist der Zwischenraum zwischen den Wänden des doppelwandigen Mantels angeordnet und druckdicht ausgebildet. Der Hohlmantel wird in diesem Fall durch den doppelwandigen Mantel ausgebildet.

Des Weiteren ist auch die Ausbildung des Zwischenraums zwischen zwei tragenden Gehäusewandungen und/oder Rohren denkbar, wobei die Gehäusewandungen bzw. Rohre druckdicht miteinander durch Schweißen, Bördeln, Flanschen oder dergleichen verschlossen sind. In diesem Fall wird der Hohlmantel durch die Gehäusewandungen und/oder Rohre ausgebildet.

Erfindungsgemäss werden mehreren evakuierbaren Zwischenräumen an der Komponente und/oder an der Abgasanlage ausgebildet, die untereinander mittels Zwischenraum-Verbindungsleitungen fluidisch verbunden sind. In einer derartigen Zwischenraum-Verbindungsleitung kann auch eine Drucksteuerungseinrichtung, wie zum Beispiel ein Ventil, angeordnet sein.

Erfindungsgemäss ist zumindest ein solcher Zwischenraum an einer Unterdruckanschlussstelle des Hohlmantels über eine Unterdruckverbindungsleitung mit einer Unterdruckerzeugungseinrichtung fluidisch verbunden. Mittels der Unterdruckerzeugungseinrichtung wird somit der Hohlmantel bzw. der durch die Wände des Hohlmantels begrenzte Zwischenraum mit einem Unterdruck beaufschlagt.

Unter Unterdruck ist ein geringerer Druck als der Umgebungsdruck zu verstehen. Wurde teilweise der Begriff "evakuiert" verwendet, so bedeutet dies nicht ausschließlich und zwingend, dass in dem Zwischenraum ein absolutes Vakuum erzeugt wird, sondern dass ebenfalls in dem Zwischenraum ein gegenüber dem Umgebungsdruck geringerer Druck herrscht.

Bevorzugt wird der Ansaugtrakt der Brennkraftmaschine als Unterdruckerzeugungseinrichtung verwendet, insbesondere dann, wenn es sich bei der Brennkraftmaschine um einen Saugmotor, also einen nicht aufgeladenen Motor handelt. Dann lassen sich stromab einer Drosselklappe bei Teillast relativ niedrige Drücke realisieren. Dazu wird der Ansaugunterdruck der Brennkraftmaschine ausgenutzt. Vorteilhaft muss dazu nur die Unterdruckverbindungsleitung mit dem Ansaugtrakt verbunden werden. Zudem ist bei laufender Brennkraftmaschine automatisch der Zwischenraum mit einem Unterdruck beaufschlagbar, so dass die Unterdruckerzeugung nicht durch zusätzliche Bauteile gewährleistet werden muss.

Des Weiteren ist es auch denkbar, eine Vakuumpumpe als Unterdruckerzeugungseinrichtung zu verwenden, vorzugsweise dann, wenn es sich bei der Brennkraftmaschine um einen aufgeladenen Motor handelt, bei dem also eine Ladeeinrichtung, z.B. ein Abgasturbolader, in der Frischluftanlage angeordnet ist. In diesem Fall kann zum Beispiel die Vakuumpumpe verwendet werden, die den Unterdruck für den Bremskraftverstärker bereitstellt. Vorteilhaft ist auch in dieser Ausführungsform keine zusätzliche Unterdruckerzeugungskomponente notwendig.

Es ist allerdings auch denkbar, dass auch eine zusätzliche Vakuumpumpe als Unterdruckerzeugungseinrichtung eingesetzt wird, die ausschließlich für die Unterdruckerzeugung in dem Zwischenraum zuständig ist. In einer weiteren Ausführungsform kann die Unterdruckverbindungsleitung auch mit dem verdichterseitigen Ansaugtrakt einer Ladeeinrichtung, insbesondere eines Abgasturboladers, verbunden werden und durch die Verdichterseite der Ladeeinrichtung der Unterdruck in dem Zwischenraum erzeugt werden.

Bei einer aufgeladenen Brennkraftmaschine ist zur Realisierung einer die thermische Isolation signifikant verbessernden Evakuierung- wie erläutert- eine zusätzliche Vakuumpumpe erforderlich, während zur Realisierung einer ausreichend großen Kühlluftströmung durch die jeweilige isolierte Komponente bereits der vergleichsweise geringe Unterdruck in der Frischluftanlage stromauf der jeweiligen Ladeeinrichtung ausreicht, so dass hierfür die Vakuumpumpe ausgeschaltet bleiben kann, was sich strom- bzw. energiesparend auswirkt..

Die Unterdruckverbindungsleitung verbindet fluidisch über die Unterdruckanschlussstelle des Hohlmantels den Zwischenraum mit der jeweiligen Unterdruckerzeugungseinrichtung, so dass durch Absaugen des Fluides aus dem Zwischenraum mittels der Unterdruckerzeugungseinrichtung der Zwischenraum mit einem Unterdruck beaufschlagt werden kann.

In der Unterdruckverbindungsleitung ist bevorzugt ein Rückschlagventil oder eine beliebige andere schaltbare Ventileinrichtung angeordnet. Dies hat den Vorteil, dass der Unterdruck nicht permanent durch die Unterdruckerzeugungseinrichtung erzeugt werden muss, und dass der Unterdruck in dem Zwischenraum nur teilweise den Druckschwankungen der Unterdruckerzeugungseinrichtung folgen muss.

Vorteilhaft wird bei Verwendung eines Rückschlagventils der Unterdruck zu Beginn des Betriebs erzeugt und danach von dem Rückschlagventil gehalten. Im Falle einer separaten Unterdruckerzeugungseinrichtung kann dann nach Erzeugen des Unterdruckes die Unterdruckerzeugungseinrichtung abgeschaltet werden. Dies ist energetisch besonders dann vorteilhaft, wenn der Unterdruck eben durch eine derartig separate Unterdruckerzeugungseinrichtung aufgebaut wird.

Besonders bevorzugt ist in der Verbindungsleitung alternativ oder zusätzlich ein Steuerungsventil angeordnet. Mittels eines einfachen Steuerungsventils kann die Höhe des Unterdruckes reguliert werden. Besonders bevorzugt weist das Steuerungsventil eine Belüftungsfunktion auf. Somit kann vorteilhaft das Steuerungsventil auch die Belüftung des Zwischenraumes vornehmen, und in diesem Fall ist vorteilhaft ein schneller Wechsel zwischen hohem und geringem Unterdruck mit einem Bauteil, nämlich dem Steuerungsventil möglich. Somit ist in diesem Fall auch ein schneller Wechsel zwischen hoher und geringer Isolierwirkung innerhalb kürzester Zeit durchführbar.

Ein Unterdruck in dem Zwischenraum verbessert die Isolierwirkung durch Reduktion der Konvektion und Wärmeleitung durch das in dem Zwischenraum befindliche Gasfluid. Bevorzugt wird der Unterdruck temporär nur während des Betriebs des Kraftfahrzeuges erzeugt. Vorteilhaft ist dadurch, auch bei kleineren Leckagen, in dem Unterdrucksystem immer wieder ein gleichbleibendes Druckniveau aufbaubar. Im Gegensatz zu einem permanenten Unterdruck, bei dem eine Leckage letztlich zu einem permanenten Verlust des Unterdruckes in dem Zwischenraum führt. Zudem kann der Unterdruck vorteilhaft nur dann aufgebaut werden, wenn er auch benötigt wird.

Bevorzugt ist der Unterdruck dabei steuerbar zum Beispiel durch ein Steuerventil, eine Belüftungseinrichtung und/oder durch ein Rückschlagventil. Somit kann je nach Bedarf der Unterdruck erhöht oder verringert werden, um die jeweilig gewünschte Isolationswirkung zu erreichen. Dadurch ist das für die jeweilige, insbesondere der katalytische, Komponente der Abgasanlage optimale Temperaturintervall einhaltbar, so dass die, insbesondere katalytischen, Komponenten der Abgasanlage einen optimierten Wirkungsgrad der Abgasnachbehandlung aufweisen und somit die Abgasemissionswerte eingehalten werden können.

Erfindungsgemäss weist der Hohlmantel eine Belüftungsanschlussstelle auf, die fluidisch über eine Verbindungsleitung den Zwischenraum mit einer Belüftungseinrichtung fluidisch verbindet. Mittels der Belüftungseinrichtung kann dabei der evakuierte Zwischenraum belüftet werden, so dass der in dem Zwischenraum herrschende Unterdruck verringert werden kann.

Besonders bevorzugt ist die Belüftungseinrichtung ohne zwischengelagerte Verbindungsleitung direkt an der Belüftungsanschlussstelle des Hohlmantel angebunden.

Erfindungsgemäss ist die Belüftungsanschlussstelle stromab der Unterdruckanschlussstelle an dem Hohlmantel angeordnet. Durch eine derartige Anordnung der Belüftungsanschlussstelle und Unterdruckanschlussstelle ist es möglich, bei aktiver Unterdruckerzeugungseinrichtung und geöffneter Belüftungseinrichtung einen Fluidstrom durch den Hohlmantel hindurch zu saugen. Somit kann in diesem Fall der Fluidstrom als Kühlung verwendet werden. Durch den den Hohlmantel durchströmenden Fluidstrom wird somit auch das die Abgasanlage durchströmende Abgas gekühlt und es können somit auch die oberen Grenzen eines Temperaturintervalls der jeweiligen, insbesondere katalytischen, Komponente der Abgasanlage eingehalten werden.

Von einem derartigen Hohlmantel kann eine gesamte Abgasanlage oder Teilbereiche der Abgasanlage umgeben sein. Ebenso ist es denkbar, dass Komponenten einer Abgasanlage zumindest in Teilbereichen von einem derartigen Hohlmantel umgeben sind.

Eine derartige evakuierbare Isolierung kann gesteuert bzw. geregelt werden. Dabei ist die Abgastemperatur als eine der Regelgrößen für die Steuerung bzw. Regelung verwendbar. Über die Abgastemperatur wird somit das Niveau des Unterdrucks bzw. der den Hohlmantel durchströmende Gasstrom eingestellt. Dazu können die Steuerungsventile in einfacher Form auch als Bimetall ausgebildet sein, wodurch sich eine selbsttätige Regelung des Unterdruckniveaus bzw. des Fluidstromes ermöglicht. Komponentenbezogen kann auch die Temperatur der jeweiligen Komponente als Regelgröße für die Steuerung einer derartigen Isoliereinrichtung herangezogen werden.

In Abhängigkeit der Temperatur der jeweiligen Komponente und/oder der Abgastemperatur, insbesondere in dem jeweiligen Komponentenabschnitt der Abgasanlage, kann somit ein Unterdruck und/oder ein Fluidstrom in dem Zwischenraum eingestellt werden. In einem ersten Temperaturbereich kann dabei in dem Zwischenraum ein hoher bis mittlerer Unterdruck eingestellt werden. In einem zweiten Temperaturbereich ist in dem Zwischenraum ein Umgebungsdruck bzw. ein geringer Unterdruck eingestellt und bevorzugt in einem dritten Temperaturbereich wird der Zwischenraum von einem Fluidstrom durchströmt. Dabei ist der erste Temperaturbereich in einem geringeren Temperaturniveau als der zweite Temperaturbereich und der zweite Temperaturbereich in einem geringeren Temperaturniveau als der dritte Temperaturbereich positioniert. Die Grenzen der Temperaturbereiche können sich dabei überlappen.

Des Weiteren kann ebenfalls zumindest ein Grenzwert des ersten und/oder des zweiten und/oder des dritten Temperaturbereiches von zumindest zwei Komponenten einen unterschiedlichen Wert aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie in den beigefügten Ansprüchen definiert

Ein bevorzugtes Ausführungsbeispiel der Erfindung ist in der Zeichnung dargestellt und wird in der nachfolgenden Beschreibung näher erläutert.

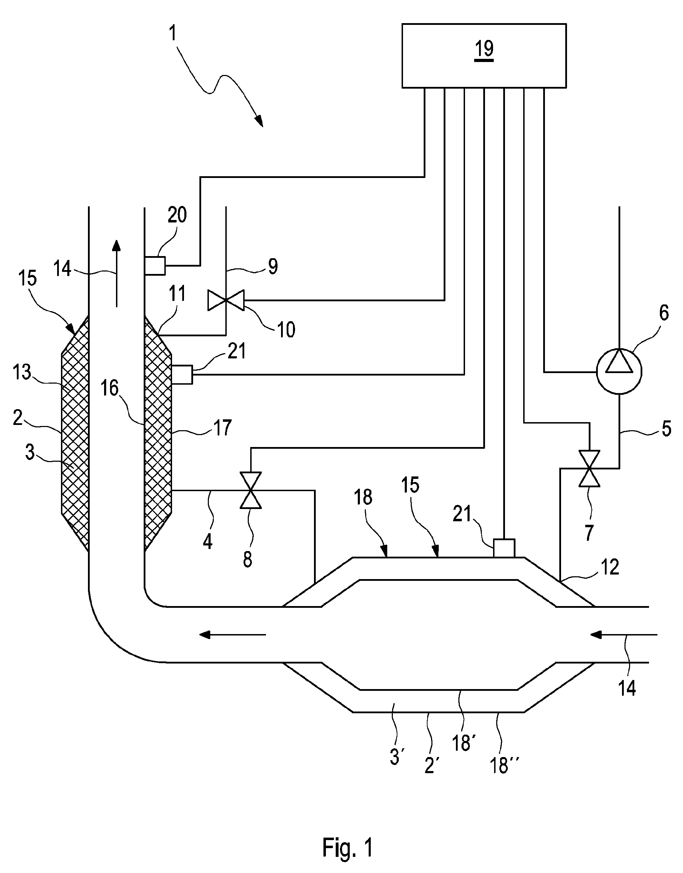

Die einzige Figur 1 zeigt schematisch eine Abgasanlage mit zwei miteinander verbundenen Zwischenräumen.

Gemäß Fig. 1 weist eine Abgasanlage 1 zwei fluidisch miteinander verbundene Hohlmäntel 2,2' auf. Dabei umgibt jeder der Hohlmäntel 2,2' einen Zwischenraum 3,3' . Über eine Zwischenraum-Verbindungsleitung 4 sind die beiden Hohlmäntel 2,2' bzw. die beiden Zwischenräume 3,3' fluidisch miteinander verbunden. Zumindest einer der Hohlmäntel 2' ist über eine Unterdruckverbindungsleitung 5 mit einer Unterdruckerzeugungseinrichtung 6 fluidisch verbunden. Eine Abgasströmungsrichtung ist durch einen Pfeil 14 angedeutet.

Jeder Hohlmantel 2, 2' gehört dabei zu einer Komponente 15 der Abgasanlage. Die eine in Flg. 1 links dargestellte abströmseitige Komponente 15 ist beispielsweise ein Rohrabschnitt der Abgasanlage 1. Die in Flg. 1 rechts gezeigte stromaufliegende Komponente 15 ist beispielsweise ein Partikelfilter oder ein Katalysator.

Zumindest einer der Zwischenräume 3 kann zumindest teilweise mit einem Füllmaterial 13 befüllt sein, das zweckmäßig als thermischer Isolator ausgestaltet ist, das durchströmbar ist und das außerdem eine gewisse Stützfunktion aufweisen kann, um die Doppelwände der jeweiligen Komponente 15 auszusteifen.

In der Unterdruckverbindungsleitung 5 kann eine Unterdruckregeleinrichtung 7 angeordnet sein, die zudem über eine Belüftungsfunktion verfügen kann. Mit der Unterdruckregeleinrichtung 7, die zum Beispiel als Steuerventil ausgebildet sein kann, ist der Unterdruck zumindest in dem Zwischenraum 3' steuerbar.

In der Zwischenraum-Verbindungsleitung 4 kann eine Drucksteuerungseinrichtung 8 angeordnet sein, die zudem ebenfalls über eine Belüftungsfunktion verfügen kann. Mit der Drucksteuerungseinrichtung 8, die beispielsweise ebenfalls als Steuerventil ausgebildet sein kann, ist der Unterdruck zumindest in dem Zwischenraum 3 steuerbar.

Des Weiteren ist zumindest ein Hohlmantel 2 bzw. Zwischenraum 3 über eine Belüftungsverbindungsleitung 9 mit einer Belüftungseinrichtung 10 verbunden. Mittels der Belüftungseinrichtung 10 ist zumindest dieser Zwischenraum 3 belüftbar.

Die Belüftungsverbindungsleitung 9 ist über eine Belüftungsanschlussstelle 11 mit dem Zwischenraum 3 fluidisch verbunden. Die Unterdruckverbindungsleitung 5 ist über eine Unterdruckanschlussstelle 12 mit dem Zwischenraum 3' fluidisch verbunden. Erfindungsgemäss ist die Unterdruckanschlussstelle 12 hinsichtlich der Luftströmung stromab der Belüftungsanschlussstelle 11 an einem der Hohlmäntel 2,2' angeordnet. Ferner ist die Unterdruckanschlussstelle 12 hinsichtlich der Abgasströmung stromauf der Belüftungsanschlussstelle 11 an einem der Hohlmäntel 2,2' angeordnet, wodurch eine Gegenstromkühlung realisierbar ist. Bei geöffneter Belüftungseinrichtung 10 und laufender Unterdruckerzeugungseinrichtung 6 kann zumindest ein Zwischenraum 3,3' von einem Fluid, vorzugsweise Luft aus der Frischluftanlage, durchströmt werden und durch einen solchen Fluidstrom gekühlt werden.

Der Hohlmantel 2 kann ein tragendes Rohr 16 aufweisen, das im Beispiel innen angeordnet ist. Bei einer anderen Ausführungsform kann das tragende Rohr 16 auch außen angeordnet sein. Auch der andere Hohlmantel 2' kann ein derartiges Rohr aufweisen. Außerdem kann der Hohlmantel 2 außen ein vorzugsweise nicht tragendes Mantelrohr 17 aufweist, so dass der Zwischenraum 3 zwischen dem tragenden Rohr 16 und dem Mantelrohr 17 ausgebildet ist. Es ist klar, dass auch eine umgekehrte Bauform mit außenliegendem tragenden Rohr 16 und innenliegendem, nicht-tragenden Mantelrohr 17 möglich ist.

Der Hohlmantel 2' weist ein doppelwandiges Rohr 18 mit Innenwand 18' und Auβenwand 18" auf, so dass der Zwischenraum 3' durch die Wände 18', 18" des doppelwandigen Rohres 18 ausgebildet ist.

Desweiteren ist eine Steuerung 19 vorgesehen, die so programmier und/oder ausgestaltet ist, dass sie zur Durchführung eines Betriebsverfahrens gegeignet ist, bei dem die Isolationswirkung des Hohlmantels 2, 2' abhängig von Abgastemperaturen und/oder Komponententemperaturen eingestellt wird. Hierzu ist die Steuerung 19 mit mindestens einem Temperatursensor 20 zur Messung der Abgastemperatur und mit mindestens einem Temperatursensor 21 zur Messung der Komponententemperatur gekoppelt. Ferner ist die Steuerung 19 mit der Unterdruckerzeugungseinrichtung 6, mit der Unterdruckregeleinrichtung 7, mit der Drucksteuerungseinrichtung 8 und mit der Belüftungseinrichtung 10 gekoppelt.

## Patentansprüche

1. Abgasanlage (1) für eine Brennkraftmaschine, insbesondere eines Kraftfahrzeugs,
- mit wenigstens einer Komponente (15),
- mit einer Unterdruckerzeugungseinrichtung (6),
- mit einem die Komponente (15) zumindest teilweise umgebenden Hohlmantel (2, 2'),
- mit einem von den Wänden des Hohlmantels (2, 2') umgebenen und druckdicht verschließbaren Zwischenraum (3, 3'),
- wobei der Zwischenraum (3, 3') durch eine Unterdruckverbindungsleitung (5) und über eine Unterdruckanschlussstelle (12) der Komponente (15) fluidisch mit der Unterdruckerzeugungseinrichtung (6) verbunden ist, mittels der in dem Zwischenraum (3, 3') ein Unterdruck erzeugt werden kann
**dadurch gekennzeichnet, dass**
- der Zwischenraum (3, 3') fluidisch durch eine Belüftungsverbindungsleitung (9) und über eine Belüftungsanschlussstelle (11) der Komponente (15) mit einer Belüftungseinrichtung (10) verbunden ist, mittels der dem Zwischenraum (3, 3') Fluid zugeführt werden kann,
- zumindest zwei solche Komponenten (15) vorgesehen sind,
- die Zwischenräume (3, 3') zumindest zweier Komponenten (15) fluidisch mittels einer Zwischenraum-Verbindungsleitung (4) in Reihe miteinander verbunden sind,
- der Zwischenraum (3) der einen Komponente (15) über die Belüftungsanschlussstelle (11) mit der Belüftungseinrichtung (10) verbunden ist, während der Zwischenraum (3') der anderen Komponente (15) über die Unterdruckanschlussstelle (12) mit der Unterdruckerzeugungseinrichtung (6) verbunden ist.

2. Abgasanlage nach Anspruch 1,
**dadurch gekennzeichnet, dass**
die Belüftungsanschlussstelle (11) stromab oder stromauf der Unterdruckanschlussstelle (12) angeordnet ist.

3. Abgasanlage nach einem der vorhergehenden Ansprüche,
**dadurch gekennzeichnet, dass**
in dem Zwischenraum (3, 3') zumindest teilweise ein Füllmaterial (13), wie z.B. eine Stützstruktur und/oder ein Fasermaterial und/oder ein Schaum, angeordnet ist.

4. Abgasanlage nach einem der vorhergehenden Ansprüche,
**dadurch gekennzeichnet, dass**
der Hohlmantel (2, 2') innen und/oder außen ein tragendes Rohr (16) aufweist.

5. Abgasanlage nach Anspruch 3,
**dadurch gekennzeichnet, dass**
der Hohlmantel (2, 2') innen und/oder außen ein Mantelrohr (17) aufweist, so dass der Zwischenraum (3, 3') zwischen dem tragenden Rohr (16) und dem Mantelrohr (17) ausgebildet ist.

6. Abgasanlage nach einem oder mehreren der vorhergehenden Ansprüche,
**dadurch gekennzeichnet, dass**
der Hohlmantel (2, 2') ein doppelwandiges Rohr (18) aufweist, so dass der Zwischenraum (3, 3') durch die Wände (18', 18") des doppelwandigen Rohres (18) ausgebildet wird.

7. Abgasanlage nach einem der vorhergehenden Ansprüche,
**dadurch gekennzeichnet, dass**
in der Zwischenraum-Verbindungsleitung (4) eine Drucksteuerungs einrichtung (8) angeordnet ist.

8. Abgasanlage nach einem der vorhergehenden Ansprüche,
**dadurch gekennzeichnet, dass**
in der Unterdruckverbindungsleitung (5) eine Unterdruckregeleinrichtung (7) angeordnet ist.

9. Abgasanlage nach einem oder mehreren der vorhergehenden Ansprüche,
**gekennzeichnet durch**
eine Steuerung (19) zur Durchführung eines Betriebsverfahrens nach Anspruch 10, wobei die Steuerung (19) mit mindestens einem Temperatursensor (20, 21) und mit der Unterdruckerzeugungseinrichtung (6) gekoppelt ist.

10. Verfahren zum Betrieb einer Abgasanlage (1) nach einem oder mehreren der Ansprüche 1 bis 9,
bei dem in Abhängigkeit der Temperatur der jeweiligen Komponente (15) und/oder der Abgastemperatur in einem jeweiligen Komponentenabschnitt der Abgasanlage (1) ein Unterdruck und/oder ein Fluidstrom in dem Zwischenraum (3, 3') eingestellt wird.

11. Verfahren nach Anspruch 10,
bei dem in einem ersten Temperaturbereich in dem Zwischenraum (3, 3') ein Unterdruck herrscht bzw. eingestellt wird, und/oder
bei dem in einem zweiten Temperaturbereich in dem Zwischenraum (3, 3') Umgebungsdruck herrscht bzw. eingestellt wird, und/oder
bei dem in einem dritten Temperaturbereich der Zwischenraum (3, 3') von einem Fluidstrom durchströmt wird.

12. Verfahren nach Anspruch 11,
**dadurch gekennzeichnet, dass**
zumindest ein Grenzwert des ersten und/oder des zweiten und/oder des dritten Temperaturbereiches von zumindest zwei Komponenten einen unterschiedlichen Wert aufweist.

## Claims

1. An exhaust system (1) for a combustion engine, in particular of a vehicle,
- having at least one component (15),
- having a vacuum generating drive (6),
- having a hollow jacket (2, 2') at least partially surrounding the component (15),
- having an intermediate space (3, 3') surrounded by the walls of the hollow jacket (2, 2') and which is closable in a pressure-tight manner,
- wherein the intermediate space (3, 3') is fluidically connected to the vacuum generating device (6) through a vacuum connection line (5) and via a vacuum connection point (12) of the component (15), by means of which a vacuum can be generated in the intermediate space (3, 3'),
**characterized in that**
- the intermediate space (3, 3') is fluidically connected to a ventilation device (10) via a ventilation connection line (9) and via a ventilation connection point (11) of the component (15), by means of which fluid can be supplied to the intermediate space (3, 3'),
- at least two of such components (15) are provided,
- the intermediate spaces (3, 3') of at least two components (15) are fluidically connected to each other in series,
- the intermediate space (3) of the one component (15) is connected to the ventilation device (10) via the ventilation connection point (11), while the intermediate space (3') of the other component (15) is connected to the vacuum generating device (6) via the vacuum connection point (12).

2. The exhaust system according to claim 1,
**characterized in**
**that** the ventilation connection point (11) is arranged downstream or upstream of the vacuum connection point (12).

3. The exhaust system according to one of the preceding claims,
**characterized in**
**that** in the intermediate space (3, 3') at least partially a filler material (13) is arranged, wherein the filler material (13) e.g. is a support structure and/or a fibre material and/or a foam.

4. The exhaust system according to one of the preceding claims,
**characterized in**
**that** the hollow jacket (2, 2') comprises a supporting pipe (16) at its inside or at its outside.

5. The exhaust system according to claim 3,
**characterized in**
**that** the hollow jacket (2, 2') inside and/or outside comprises a jacket pipe (17), so that the intermediate space (3, 3') is formed between the supporting pipe (16) and the jacket pipe (17).

6. The exhaust system according to one or a several of the preceding claims,
**characterized in**
**that** the hollow jacket (2, 2') comprises a double-walled pipe (18), so that the intermediate space (3, 3') is formed through the walls (18', 18") of the double-walled pipe (18).

7. The exhaust system according to one of the preceding claims,
**characterized in**
**that** in the intermediate space connection line (4) a pressure control device (8) is arranged.

8. The exhaust system according to one of the preceding claims,
**characterized in**
**that** in the vacuum connection line (5) a vacuum regulating device (7) is arranged.

9. The exhaust system according to one or several preceding claims,
**characterized in**
**that** a control (19) for performing a method for operating according to claim 10 is provided, wherein the control (19) is coupled with at least one temperature sensor (20, 21) and with the vacuum generating device (6).

10. A method for operating an exhaust system (1), according to one or several of the claims 1 to 9, wherein as a function of the temperature of the respective component (15) and/or of the exhaust temperature in a respective component portion of the exhaust system (1) a vacuum and/or a fluid flow in the intermediate space (3, 3') is set.

11. The method according to claim 11,
**characterized in that**
- in a first temperature region in the intermediate space (3, 3') a vacuum is present or is set, respectively, and/or
- in a second temperature range in the intermediate space (3, 3') the ambient pressure is present or is set, respectively, and/or
- in a third temperature region a fluid flow flows through the intermediate space (3, 3').

12. The method according to claim 11, wherein the limit values of the first and/or second and/or third temperature region of at least two components have different values.

## Revendications

1. Système d'échappement (1) pour un moteur à combustion interne, en particulier d'un véhicule automobile,
- avec au moins un composant (15),
- avec un dispositif de production de basse pression (6),
- avec une gaine creuse (2, 2') entourant au moins en partie le composant (15), avec un espace intermédiaire (3, 3') entouré par les parois de la gaine creuse (2, 2') et pouvant être fermée de manière étanche à la pression,
- dans lequel l'espace intermédiaire (3, 3') est raccordé de manière fluidique au dispositif de production de basse pression (6) par un conduit de raccordement de basse pression (5) et par l'intermédiaire d'un point de raccordement de basse pression (12) du composant (15), au moyen duquel une pression basse peut être produite dans l'espace intermédiaire (3, 3')
**caractérisé en ce**
- **que** l'espace intermédiaire (3, 3') est raccordé de manière fluidique à un dispositif d'aération (10) par un conduit de raccordement d'aération (9) et par l'intermédiaire d'un point de raccordement d'aération (11) du composant (15), au moyen duquel du fluide peut être amené à l'espace intermédiaire (3, 3'),
- **qu'**au moins deux composants (15) de ce type sont prévus,
- **que** les espaces intermédiaires (3, 3') d'au moins deux composants (15) sont raccordés de manière alignée les uns avec les autres de manière fluidique au moyen d'un conduit de raccordement d'espace intermédiaire (4),
- **que** l'espace intermédiaire (3) de l'un des composants (15) est raccordé au dispositif d'aération (10) par l'intermédiaire du point de raccordement d'aération (11), tandis que l'espace intermédiaire (3') de l'autre composant (15) est raccordé au dispositif de production de basse pression (6) par l'intermédiaire du point de raccordement de basse pression (12).

2. Système d'échappement selon la revendication 1,
**caractérisé en ce**
**que** le point de raccordement d'aération (11) est disposé en aval ou en amont du point de raccordement de basse pression (12).

3. Système d'échappement selon l'une quelconque des revendications précédentes,
**caractérisé en ce**
**qu'**un matériau de remplissage (13), tel que par exemple une structure de soutien et/ou un matériau à base de fibres et/ou une mousse, est disposé au moins en partie dans l'espace intermédiaire (3, 3').

4. Système d'échappement selon l'une quelconque des revendications précédentes,
**caractérisé en ce**
**que** la gaine creuse (2, 2') présente à l'intérieur et/ou à l'extérieur un tuyau de support (16).

5. Système d'échappement selon la revendication 3,
**caractérisé en ce**
**que** la gaine creuse (2, 2') présente à l'intérieur et/ou à l'extérieur un tuyau de gaine (17) si bien que l'espace intermédiaire (3, 3') est réalisé entre le tuyau de support (16) et le tuyau de gaine (17).

6. Système d'échappement selon l'une quelconque ou plusieurs des revendications précédentes,
**caractérisé en ce**
**que** la gaine creuse (2, 2') présente un tuyau à double paroi (18), si bien que l'espace intermédiaire (3,3') est réalisé par les parois (18',18") du tuyau à double paroi (18).

7. Système d'échappement selon l'une quelconque des revendications précédentes,
**caractérisé en ce**
**qu'**un dispositif de commande de pression (8) est disposé dans le conduit de raccordement d'espace intermédiaire (4).

8. Système d'échappement selon l'une quelconque des revendications précédentes,
**caractérisé en ce**
**qu'**un dispositif de régulation de basse pression (7) est disposé dans le conduit de raccordement de basse pression (5).

9. Système d'échappement selon l'une quelconque ou plusieurs des revendications précédentes, **caractérisé par**
une commande (19) pour mettre en oeuvre un procédé de fonctionnement selon la revendication 10, dans lequel la commande (19) est couplée à au moins un capteur de température (20, 21) et au dispositif de production de basse pression (6).

10. Procédé pour faire fonctionner un système d'échappement (1) selon l'une quelconque ou plusieurs des revendications 1 à 9,
où une basse pression et/ou un flux de fluide dans l'espace intermédiaire (3, 3') sont réglés en fonction de la température du composant (15) respectif et/ou de la température de gaz d'échappement dans un tronçon de composant respectif du système d'échappement (1).

11. Procédé selon la revendication 10,
où une basse pression règne ou est réglée dans une première plage de température dans l'espace intermédiaire (3, 3'), et/ou
où une pression environnante règne ou est réglée dans une deuxième plage de température dans l'espace intermédiaire (3, 3'), et/ou
où l'espace intermédiaire (3, 3') est traversé par un flux de fluide dans une troisième plage de température.

12. Procédé selon la revendication 11,
**caractérisé en ce**
**qu'**au moins une valeur limite de la première et/ou de la deuxième et/ou de la troisième plage de température d'au moins deux composants présente une valeur différente.
